# EUROPÄISCHE PATENTSCHRIFT

(11) **EP 3 145 699 B1**
(45) Veröffentlichungstag und Bekanntmachung des Hinweises auf die Patenterteilung: **31.05.2023**
(21) Anmeldenummer: 15738239.1
(22) Anmeldetag: 23.04.2015
(51) Int. Cl.: B29C 64/153, B29C 64/40, B29C 64/259, B29C 64/393, B22F 10/28, B22F 10/80, B22F 12/00, B22F 12/82, B33Y 40/00

(54) **VORRICHTUNG ZUR GENERATIVEN HERSTELLUNG DREIDIMENSIONALER OBJEKTE AUS PULVERARTIGEM BAUMATERIAL**
DEVICE FOR THE ADDITIVE MANUFACTURING OF THREE-DIMENSIONAL OBJECTS FROM POWDERY CONSTRUCTION MATERIAL
DISPOSITIF DE FABRICATION ADDITIVE D'OBJETS TRIDIMENSIONNELS À PARTIR D'UN MATÉRIAU DE CONSTRUCTION PULVÉRULENT

(30) Priorität: 21.05.2014 DE 102014007408
(43) Veröffentlichungstag der Anmeldung: 29.03.2017
(73) Patentinhaber: Concept Laser GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/DE2015/100169
(87) Internationale Veröffentlichungsnummer: WO 2015/176709

(56) Entgegenhaltungen:
- EP-A1- 2 537 642
- EP-A2- 1 769 903
- EP-A2- 1 769 904
- WO-A1-03/058506
- DE-A1-102009 015 130
- DE-B3-102007 048 385
- US-A1- 2009 173 443
- US-A1- 2013 052 291
- US-A1- 2013 075 957

## Beschreibung

Die Erfindung/Neuerung betrifft eine Vorrichtung zur generativen Herstellung dreidimensionaler Objekte aus pulverartigem Baumaterial unter Einbringung von Strahlungsenergie, mit den weiteren Merkmalen des Patentanspruches 1. Derartige Vorrichtung werden als Lasersinter- oder Laserschmelzanlagen bezeichnet und weisen ein Gehäuse mit einer Prozesskammer auf, in welcher ein Bauraum oder ein Wechselbehälter mit einer höhenverlagerbaren Bauplattform angeordnet ist.

Beim Bauvorgang wird auf die Bauplattform eine dünne Schicht von pulverartigem Baumaterial aufgebracht und anschließend bereichsweise entsprechend einer vorgegebenen Struktur des zu fertigenden Bauteils verfestigt. Dieser Vorgang wird durch jeweiliges Neubeschichten der vorherigen Pulverschicht oder verfestigten Teilschicht weitergeführt, bis das dreidimensionale Bauteil in Schichtbauweise in Strahlungseinwirkung abgeschlossen ist.

Bei derartigen Vorrichtungen ist es bereits bekannt geworden, sogenannte Wechselbehälter zu verwenden, die in eine Prozesskammer eingefahren werden können, um den Bauprozess durchzuführen und nach Abschluss des Bauprozesses mit dem darin befindlichen Objekt aus der Prozesskammer wieder entnommen werden können. Diese Wechselbehälter werden dann in eine sogenannte Auspackstation oder Weiterbearbeitungsstation verbracht und das Werkstück dort entsprechend weiterbearbeitet.

Eine derartige Vorrichtung ergibt sich beispielsweise aus DE 10 2009 036153 A1.

US 2009/0173443 A1 lehrt ein Verfahren zur Herstellung und Verwendung von dreidimensionalen Objekten, welche ein eingebundenes Identifikationsetikett aufweisen.

EP 1 769 903 A2 beschreibt eine Herstellungsvorrichtung und ein Verfahren zum schnellen Herstellen von Prototypen, wie z. B. ein Stereolithographieverfahren. Hierbei wird das Baumaterial in mit RFID-Tags versehene Wannen angeordnet.

US 2013/0052291 A1 lehrt eine Vorrichtung und ein Verfahren zum Entfernen von unverfestigten pulverförmigen Baumaterial. Hierzu wird ein Wechselbehälter in die Vorrichtung eingesetzt und das in diesem Behälter befindliche unverfestigte Baumaterial über eine Düse, während eine innerhalb des Behälters angeordnete Plattform ausgefahren wird, definiert weggeblasen. Der Behälter kann mit einem Identifizierer, z. B. mit einem IC-Etikett oder einem Informationscode, ausgestattet sein. Der Erfindung liegt die Aufgabe zugrunde, eine Vorrichtung mit den Merkmalen des Oberbegriffs des Anspruches 1 derart weiterzubilden, dass nach dem Bauvorgang eine Kundenzuordnung, eine Analyse und/oder ein Weitertransport und/oder eine zielgerichtete Weiterbearbeitung des Werkstückes zu weiteren Stationen automatisiert objektindividualisiert erfolgen kann.

Diese Aufgabe wird nach dem Kennzeichen des Anspruches 1 dadurch gelöst.

Als Kern der Erfindung wird es angesehen, dem in der Vorrichtung hergestellten Objekt einen Speicherchip beiseite zu stellen, der in den Wechselbehälter integriert ist oder lösbar oder unlösbar an diesem befestigt ist. In diesem Chip können zunächst durch eine Schreibvorrichtung Baudaten eingegeben werden, die geeignet sind, den Bauvorgang, der in der Vorrichtung abgelaufen ist, im Sinne eines "Reverse Engineering" noch einmal rückabzuwickeln, um festzustellen, ob das in der Vorrichtung hergestellte Objekt z. B. innere Strukturfehler aufweisen könnte und dgl. Baudaten sind z. B. Laserleistung, Beschichtungsdaten, atmosphärische Daten in der Baukammer, Temperatur, insbesondere aber auch Schmelzepooltemperaturen oder Schmelzepoolgrößen im Bereich des Laserbrennflecks auf der Pulverschicht, oder andere Daten, die geeignet sind, Aufschluss über einen bereits durchgeführten Bauvorgang zu geben.

Darüber hinaus können in den gleichen Chip Kundeninformationen abgelegt werden, z. B. eine Kundennummer, Herstellungsdaten, Lieferdatum und Lieferort. Auch hier sind hinsichtlich Kunden- oder Lieferdaten keine Grenzen gesetzt.

Weiterhin ist es möglich, den Chip dazu heranzuziehen, nachfolgende Bearbeitungsschritte zu steuern, wenn das hergestellte Objekt z. B. einer speziellen Oberflächenbearbeitung unterzogen wird oder zu einer Gravurvorrichtung gefördert werden soll. Der Herstellungsvorrichtung nachfolgende Bearbeitungseinrichtungen wie Frässtationen, thermische Behandlungsstationen, Polierstationen, Handlingstationen, eine optische Messtation oder auch eine Desinfektionsstation zur desinfizierenden Behandlung des Bauteils und dgl. können automatisch durch den Chip gesteuert werden.

Der Transportweg zu solchen Bearbeitungseinrichtungen, der zwischen der eigentlichen Herstellungsvorrichtung und den Bearbeitungsvorrichtungen zurückzulegen ist, ist ebenfalls gezielt durch den Speicherchip abgefahren werden, sodass ein manueller Eingriff beim Transport des Objektes zu weiteren Bearbeitungsstationen nicht erforderlich wird. Letztendlich ist es auch möglich, auf dem Chip eine Position in einem Lagerbereich abzuspeichern, der dann automatisch von einer Transportvorrichtung angefahren wird. Ist der Chip ein RFID-Chip, dann kann durch eine RFID-Lesevorrichtung beim Betreten des Lagerraumes sofort eine Inventur gemacht werden und festgestellt werden, welche bereits hergestellten Objekte wo in dem Lagerraum sind und welche zu einem gewissen Zeitpunkt abzuholen und auszuliefern sind.

Schließlich ist es auch im Rahmen der Erfindung, den Speicherchip dazu heranzuziehen, aktive Elemente des Wechselbehälters, der mit dem Speicherchip versehen ist, zu steuern. Erfindungsgemäß ist ein aktives Element wenigstens einen Antriebsmotor des Wechselbehälters zum Verfahren des Wechselbehälters. Dazu können Stellmotoren zur Höhenverlagerung der Bauplattform, Heizelemente, Kühlelemente, Belüftungsmotoren, Absaugeinrichtungen und dergleichen gesteuert werden, die im Wechselbehälter integriert sind. Da der Speicherchip individuell für jeden Bauvorgang_programmierbar ist, kann die Steuerung der aktiven Elemente des Wechselbehälters an den Bauprozess und nachfolgende Behandlungsschritte genau angepasst werden.

All diese Daten können auf ein und demselben Chip festgehalten werden, wobei es aber auch im Rahmen der Erfindung liegt, eine Mehrzahl von auslesbaren Speicherchips vorzusehen, die dem Wechselbehälter oder dem gebauten Projekt beigestellt werden und mit diesem aus der Prozesskammer der Vorrichtung entnommen werden können. Die Programmierung kann in der Vorrichtung selbst vorgenommen werden, es ist aber auch möglich, vorprogrammierte Chips beizustellen, die bereits zur Gänze oder teilweise vorprogrammiert sind und z. B. nur noch mit den Herstellungsdaten geladen werden.

Die Lasersinter- oder Laserschmelzanlage kann mit einer Eingabevorrichtung versehen werden, beispielsweise einem Kartenleser oder einer sonstigen Eingabevorrichtung, die geeignet ist, den Speicherchip mehr oder weniger vollständig zu programmieren.

Nach dem Herstellungsvorgang wird der Wechselbehälter aus der Vorrichtung herausgefahren und kann auf vorgesehenen Förderbahnen zu solchen weiteren Bearbeitungsstationen verbracht werden, die als Zwischen- oder Zielstation auf dem Speicherchip abgespeichert sind. Eine Zwischenstation wäre z. B. eine Zwischenbearbeitungsstation, eine Zielstation wäre ein Lagerplatz.

In der Lasersinter- oder Laserschmelzvorrichtung sowie in weiteren Bearbeitungsstationen wie z. B. Frässtationen oder thermischen Behandlungsstationen oder auch an Abschnitten der Fahrstrecke des Wechselbehälters zwischen der Vorrichtung und den weiteren Bearbeitungsstationen oder Lagerstätten können mit dem Speicherchip zusammenwirkende elektronische Lesevorrichtungen angeordnet werden, die dazu geeignet sind, Weicheneinrichtungen zu steuern, damit der Wechselbehälter zur richtigen Station verfahren wird Grundsätzlich ist es auch möglich, mit dem Speicherchip einen Prozessor zu koppeln, der mit wenigstens einem Sensorelement im Inneren des Wechselbehälters zusammenwirkt. Dadurch lassen sich physikalische Daten, wie Druck, Temperatur, Zeit, Beschleunigungswerte und dgl. feststellen, um auf dem Speicherchip festzuhalten, ob nach dem Herstellungsvorgang auf das Objekt irgendwelche äußeren Umstände eingewirkt haben, die zu einer Beschädigung des Objektes führen. Ein Beschleunigungssensor kann beispielsweise einen heftigen Aufprall feststellen, der geeignet ist, zu einem Bruch oder Teilbruch eines Objektes zu führen.

Die Erfindung/Neuerung ist anhand vorteilhafter Ausführungsbeispiele in den Zeichnungsfiguren näher erläutert. Diese zeigen:
- Fig. 1: eine schematische Darstellung einer erfindungsgemäßen Vorrichtung mit einer Mehrzahl von Transportwegen, Bearbeitungsstationen und Lagerpositionen;
- Fig. 2: eine schematische Ansicht eines Wechselbehälters mit zwei angedeuteten Positionen eines auslesbaren Speicherchips;
- Fig. 3: eine schematische Darstellung eines Wechselbehälters mit einem in einem Pulverbett eingelagerten Speicherchip;
- Fig. 4: eine schematische Schnittdarstellung durch eine Baukammer mit einem darin aufgebauten Objekt, an welchem über einen Verbindungssteg ein Speicherchip befestigt ist. Diese Ausführungsform entspricht nicht der beanspruchten Erfindung.

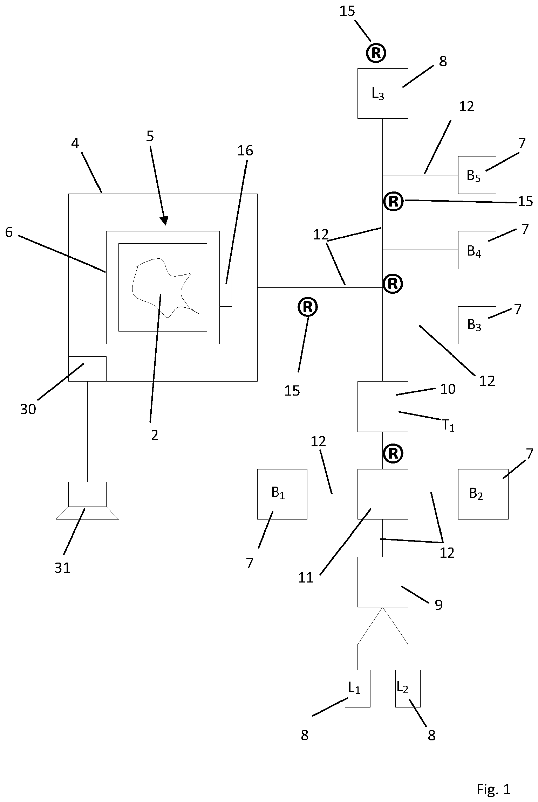

Die in Figur 1 dargestellte Vorrichtung 1 dient zur Herstellung dreidimensionaler Objekte 2 aus pulverartigem Baumaterial 3 unter Einbringung von Strahlungsenergie. Insbesondere handelt es sich um eine Lasersinter- oder eine Laserschmelzvorrichtung. In einem Gehäuse 4 ist eine Prozesskammer 5 untergebracht, in welcher ein Bauraum oder ein Wechselbehälter 6 mit einer höhenverlagerbaren Bauplattform angeordnet ist, auf die das zur Verfestigung mittels Strahlungsenergie vorgesehene pulverartige Baumaterial aufgebracht werden kann.

In Figur 1 ist weiter dargestellt, dass neben der eigentlichen Herstellungsvorrichtung weitere Bearbeitungsstationen 7, Lagerstationen 8, wenigstens eine Auspackstation 9, eine Teststation 10 und beispielsweise eine Gravurstation 11 vorgesehen sind, die alle über Transportwege 12 miteinander so verbunden sind, dass der Wechselbehälter 6 zu der unterschiedlichen Bearbeitungsstationen 7, Lagerplätzen 8 oder weiteren Positionen entlang der Transportwege 12 gefördert werden können.

Um das Anfahren der unterschiedlichen Transportwege 12 oder Bearbeitungseinrichtungen oder Lagerpositionen zu steuern, ist ein mit dem Wechselbehälter 6 aus der Prozesskammer der Vorrichtung 1 entnehmbarer, über eine elektronische Lesevorrichtung 15 auslesbarer Speicherchip 16 vorgesehen, auf dem zu dem generativen Herstellungsverfahren gehörige Herstellungsdaten und/oder nachfolgende Bearbeitungsschritte oder die Bearbeitungsstationen zur automatischen Steuerung von Bearbeitungseinrichtungen, Transportwegen und/oder Lagerpositionen abgespeichert sind.

Die Zuordnung zwischen Wechselbehälter 6 und Speicherchip 16 kann auf unterschiedliche Weise vorgenommen werden.

In Figur 1 ist dargestellt, dass der Speicherchip 16 an einer Außenwandung des Wechselbehälters 6 angebracht ist.

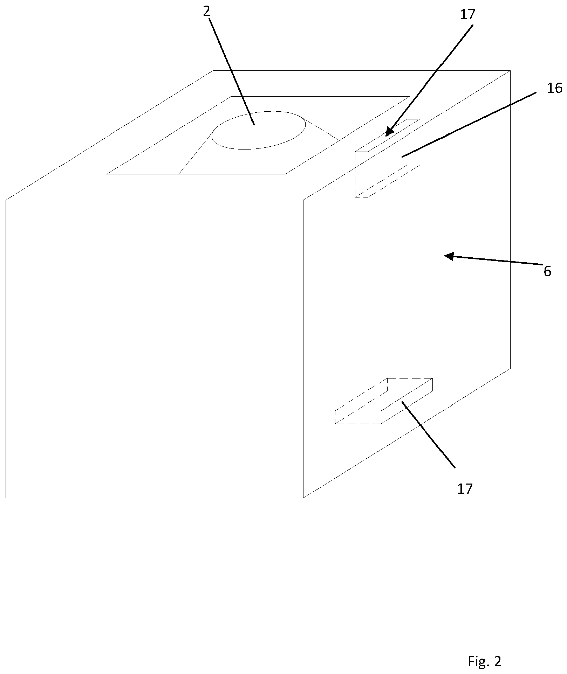

In Figur 2 ist angedeutet, dass der Speicherchip 16 in taschenartige Ausnehmungen 17 des Wechselbehälters 6 eingesteckt und dort z.B. verrastet werden kann.

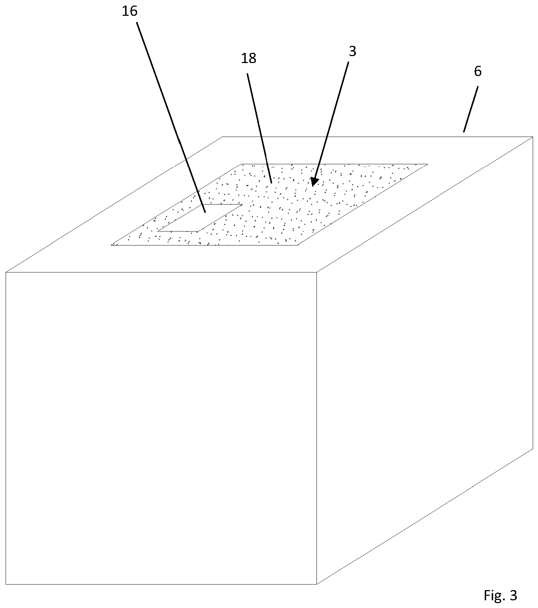

In Figur 3 ist dargestellt, dass es auch ausreichend ist, den Speicherchip 16 in das Pulverbett 18 des Baumaterials 3 einzulegen und dort zu belassen, so dass der Speicherchip 16 mit dem Wechselbehälter 6 aus der Prozesskammer entnommen werden kann. Zur temporären Fixierung des Speicherchips 16 kann dieser z. B. in ein Gehäuse mit in das Pulverbett hineinstehenden Ankervorsprüngen eingebracht werden.

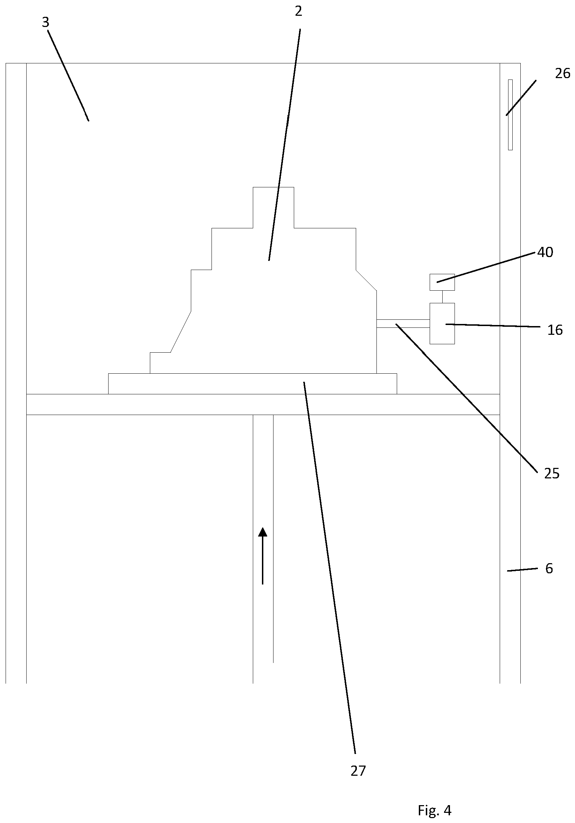

Eine weitere Möglichkeit, die nicht der beanspruchten Erfindung entspricht, der Anordnung des Speicherchips 16 ist in Figur 4 schematisch dargestellt. Dort ist der Speicherchip 16 über einen Steg 25 mit dem Objekt 2 verbunden, so dass eine feste Zuordnung zwischen Speicherchip 16 und Objekt 2 auch nach dem Entpacken des Objektes aus dem Baumaterial 3 bestehen bleibt. Es liegt im Rahmen der Erfindung, neben dem Speicherchip 16, der mit dem Objekt verbunden ist, einen oder mehrere Speicherchips 26 in Verbindung mit dem Wechselbehälter 6 vorzusehen. Die Speicherchips 26 können beispielsweise dazu herangezogen werden, um Weicheneinrichtungen der Transportwege 12 zu beeinflussen, der Speicherchip 16 an dem Objekt 2 beinhaltet dagegen Kundendaten, Prozessdaten wie z.B. Herstellungstemperaturen, Schmelzepooltemperaturen und dergleichen. Natürlich ist es möglich, alle Daten auf beiden Speicherchips 16, 26 festzuhalten und entsprechend auszulesen und zu verwerten.

In Figur 4 ist dargestellt, dass der Speicherchip auch in einer Bauplatte 27 untergebracht werden kann, auf die beim Bauvorgang pulverartiges Baumaterial 3 aufgeschichtet und dort verfestigt wird, um die ersten Schichten des Objektes 2 zu bauen.

In Figur 1 ist noch dargestellt, dass in der Prozesskammer 5 eine Programmiervorrichtung 30 vorgesehen sein kann, die mit einer Eingabeeinheit 31 in Verbindung steht, um entsprechende Daten auf den Speicherchip 16 zu laden.

Es liegt auch im Rahmen der Erfindung, mit dem Speicherchip 16 wenigstens einem Prozessor 40 zu verbinden, der mit wenigstens einem Sensorelement im Inneren des Wechselbehälters 6 zusammenwirkt, um beispielsweise schädliche Beschleunigungen, Temperaturen oder sonstige Einflüsse auf das Objekt 2 zu registrieren bzw. zu melden.

### BEZUGSZEICHENLISTE

- 1: Vorrichtung
- 2: Objekt
- 3: Baumaterial
- 4: Gehäuse
- 5: Prozesskammer
- 6: Wechselbehälter
- 7: Bearbeitungsstation
- 8: Lagerposition
- 9: Auspackstation
- 10: Teststation
- 11: Gravurstation
- 12: Transportweg

- 15: Lesevorrichtung
- 16: Speicherchip

- 25: Steg
- 26: Speicherchip
- 27: Bauplatte

- 30: Programmiervorrichtung
- 31: Eingabeeinheit

- 40: Prozessor

## Patentansprüche

1. Vorrichtung (1) zur generativen Herstellung dreidimensionaler Objekte (2) aus pulverartigem Baumaterial (3) unter Einbringung von Strahlungsenergie in einem Bauprozess, wobei die Vorrichtung (1) eine Lasersinter- und/oder Laserschmelzvorrichtung ist, mit wenigstens einem Gehäuse (4) mit einer Prozesskammer (5), in welcher ein Wechselbehälter (6) mit einer höhenverlagerbaren Bauplattform angeordnet ist, auf die das zur Verfestigung mittels Strahlungsenergie vorgesehene pulverartige Baumaterial (3) aufbringbar ist,
wobei
einen mit dem Wechselbehälter (6) aus der Prozesskammer (5) der Vorrichtung (1) entnehmbaren, über eine elektronische Lesevorrichtung (15) auslesbaren Speicherchip (16), wobei der Wechselbehälter (6) mit dem Speicherchip (16) versehen ist, auf dem Daten zur Steuerung von wenigstens einem Antriebsmotor des Wechselbehälters (6) zum Verfahren des Wechselbehälters (6) abgespeichert sind.

2. Vorrichtung nach Anspruch 1,
**dadurch gekennzeichnet, dass**
Stellmotoren zur Höhenverlagerung der Bauplattform und/oder Heizelemente und/oder Kühlelemente und/oder Belüftungsmotoren und/oder Absaugeinrichtungen in dem Wechselbehälter (6) integriert sind, und über den Speicherchip (16) gesteuert werden.

3. Vorrichtung nach einem der vorhergehenden Ansprüche,
**dadurch gekennzeichnet, dass**
der Speicherchip (16) mit einer auf der Bauplattform angeordneten Bauplatte (27) verbunden ist oder in dieser angeordnet ist.

4. Vorrichtung nach einem der vorhergehenden Ansprüche,
**dadurch gekennzeichnet, dass**
eine Programmiervorrichtung (30, 31) für den Speicherchip (16) im Bereich der Prozesskammer (5) angeordnet ist.

5. Vorrichtung nach einem der vorhergehenden Ansprüche,
**dadurch gekennzeichnet, dass**
der Speicherchip (16) in den Wechselbehälter (6) integriert oder lösbar oder unlösbar an diesem befestigt ist, und/oder
der Speicherchip (16) im nichtverfestigtem Baumaterial innerhalb des Wechselbehälters (6) einliegt und/oder
in einer Bauplattform angeordnet ist.

6. Vorrichtung nach einem der vorhergehenden Ansprüche,
**dadurch gekennzeichnet, dass**
- in der Vorrichtung (1),
- in weiteren Bearbeitungsstationen (7) und/oder
- an Abschnitten der Transportwege (12) des Wechselbehälters (6) zwischen der Vorrichtung (1) und der weiteren Bearbeitungsstationen (7) mit dem Speicherchip (16) zusammenwirkende elektronische Lesevorrichtungen (15) angeordnet sind.

7. Vorrichtung nach einem der vorhergehenden Ansprüche,
**dadurch gekennzeichnet, dass**
der Speicherchip (16) mit wenigstens einem Prozessor (40) verbunden ist, der mit wenigstens einem Sensorelement im Inneren des Wechselbehälters (6) zusammenwirkt.

8. Vorrichtung nach einem der vorhergehenden Ansprüche,
**dadurch gekennzeichnet, dass**
eine Mehrzahl von weiteren Bearbeitungsstationen (7, 8, 9, 10) durch den Wechselbehälter (6) anfahrbar sind, wobei entlang des Transportweges (12) eine Mehrzahl von durch Informationen des Speicherchips (16) elektronisch steuerbaren Weichenvorrichtungen vorgesehen sind.

9. Vorrichtung nach einem der vorhergehenden Ansprüche,
**dadurch gekennzeichnet, dass**
die auf dem Speicherchip (16) abspeicherbaren Bearbeitungsabläufe thermische Behandlungsschritte, mechanische Oberflächenbehandlungsschritte, optische Vermessungsschritte, Oberflächenbestrahlungsschritte, Beschriftungsschritte, Abkühlungszeiten und Abkühlungsatmosphären betreffen.

10. Vorrichtung nach einem der vorhergehenden Ansprüche,
**dadurch gekennzeichnet, dass**
die weiteren Bearbeitungsstationen (7 - 10) jeweils wenigstens eine thermische Bestrahlungsstation, eine Beschriftungsstation, eine Laseroberflächenbearbeitungsstation, eine Messstation, eine Abkühlstation und/oder eine Entnahmestation sind.

11. Vorrichtung nach einem der vorhergehenden Ansprüche,
**dadurch gekennzeichnet, dass**
durch den Speicherchip (16) wenigstens ein Stellmotor des Wechselbehälters (6) steuerbar ist, wobei der Stellmotor die Höhenverlagerung der im Wechselbehälter (6) angeordneten höhenverlagerbaren Bauplattform in Folge von auf dem Speicherchip (16) abgelegten Informationen steuert.

12. Vorrichtung nach Anspruch 1,
**dadurch gekennzeichnet, dass**
eine Heizvorrichtung des Wechselbehälters (6) durch auf dem Speicherchip (16) abgelegte Informationen steuerbar ist.

13. Vorrichtung nach einem der vorhergehenden Ansprüche, **dadurch gekennzeichnet, dass** auf dem Speicherchip (16) Daten zur Steuerung wenigstens eines aktiven Elements des Wechselbehälters (6) selbst abgespeichert sind, wobei die Steuerung des aktiven Elements des Wechselbehälters (6) an den Bauprozess anpassbar oder angepasst ist.

14. Wechselbehälter (6) zur Verwendung in einer Vorrichtung nach einem der vorhergehenden Ansprüche, wobei der Wechselbehälter (6) mit einem über eine elektronische Lesevorrichtung (15) auslesbaren Speicherchip (16) und mit wenigstens einem Antriebsmotor versehen ist wobei auf dem Speicherchip (16) Daten zur Steuerung von dem wenigstens einem Antriebsmotor des Wechselbehälters (6) zum Verfahren des Wechselbehälters (6) abgespeichert sind.

15. Wechselbehälter (7) nach Anspruch 14, **dadurch gekennzeichnet, dass** der Wechselbehälter (6) einen Stellmotoren zur Höhenverlagerung der Bauplattform, Heizelemente, Kühlelemente, Belüftungsmotoren und/oder Absaugeinrichtungen umfasst, welche über den Speicherchip (16) steuerbar sind.

## Claims

1. Device (1) for generative manufacturing of three-dimensional objects (2) from powdery construction material (3) by introducing radiation energy in a construction process, wherein the device (1) is a laser sintering and/or laser melting device, comprising at least one housing (4) having a process chamber (5) in which an exchangeable container (6) having a height-adjustable construction platform is arranged, onto which the powdery construction material (3), provided for hardening by means of radiation energy, can be applied,
**characterized by**
a memory chip (16) which can be removed from process chamber (5) of the device (1) together with the exchangeable container (6) and can be read out via an electronic reading device (15), wherein the exchangeable container (6) is provided with the memory chip (16), on which data for controlling at least one drive motor of the exchangeable container (6) for moving the exchangeable container (6) are stored.

2. Device according to claim 1,
**characterised in that**
servomotors for height adjustment of the construction platform and/or heating elements and/or cooling elements and/or ventilation motors and/or suction devices are integrated in the exchangeable container (6) and are controlled via the memory chip (16).

3. Device according to either of the preceding claims,
**characterised in that**
the memory chip (16) is connected to a construction board (27) arranged on the construction platform, or is arranged in said board.

4. Device according to any of the preceding claims,
**characterised in that**
a programming device (30, 31) for the memory chip (16) is arranged in the region of the process chamber (5).

5. Device according to any of the preceding claims,
**characterised in that**
the memory chip (16) is integrated into the exchangeable container (6) or is releasably or non-releasably fixed thereto, and/or
the memory chip (16) is enclosed within the exchangeable container (6) in the non-hardened construction material, and/or
is arranged in a construction platform.

6. Device according to any of the preceding claims,
**characterised in that**
electronic reading devices (15) which interact with the memory chip (16) are arranged
- in the device (1),
- in further processing stations (7), and/or
- at portions of the transport paths (12) of the exchangeable container (6) between the device (1) and the further processing stations (7).

7. Device according to any of the preceding claims,
**characterised in that**
the memory chip (16) is connected to at least one processor (40) which interacts with at least one sensor element in the interior of the exchangeable container (6).

8. Device according to any of the preceding claims,
**characterised in that**
a plurality of further processing stations (7, 8, 9, 10) can be approached by the exchangeable container (6), wherein a plurality of switch devices which can be electronically controlled by information of the memory chip (16) is provided along the transport path (12).

9. Device according to any of the preceding claims,
**characterised in that**
the processing sequences which can be stored on the memory chip (16) relate to thermal treatment steps, mechanical surface treatment steps, optical measuring steps, surface irradiation steps, labelling steps, cooling times and cooling atmospheres.

10. Device according to any of the preceding claims,
**characterised in that**
the further processing stations (7 - 10) are in each case at least one thermal irradiation station, a labelling station, a laser surface processing station, a measuring station, a cooling station and/or a removal station.

11. Device according to any of the preceding claims,
**characterised in that**
at least one servomotor of the exchangeable container (6) can be controlled by the memory chip (16), wherein the servomotor controls the height adjustment of the height-adjustable construction platform arranged in the exchangeable container (6), as a result of information stored on the memory chip (16).

12. Device according to claim 1,
**characterised in that**
a heating device of the exchangeable container (6) can be controlled by information stored on the memory chip (16).

13. Device according to any of the preceding claims, **characterised in that** data for controlling at least one active element of the exchangeable container (6) itself are stored on the memory chip (16), wherein the control of the active element of the exchangeable container (6) can be or is adjusted to the construction process.

14. Exchangeable container (6) for use in a device according to any of the preceding claims, wherein the exchangeable container (6) is provided with a memory chip (16) which can be read via an electronic reading device (15), and at least one drive motor, wherein data for controlling the at least one drive motor of the exchangeable container (6) for moving the exchangeable container (6) are stored on the memory chip (16).

15. Exchangeable container (7) according to claim 14, **characterised in that** the exchangeable container (6) comprises a servomotor for height adjustment of the construction platform, heating elements, cooling elements, ventilation motors and/or suction devices, which are controllable via the memory chip (16).

## Revendications

1. Dispositif (1) de fabrication générative d'objets tridimensionnels (2) à partir d'un matériau de construction (3) pulvérulent en introduisant de l'énergie de rayonnement dans un processus de construction, dans lequel le dispositif (1) est un dispositif de frittage au laser et/ou un dispositif de fusion laser, avec au moins un boîtier (4) avec une chambre de processus (5), dans laquelle un contenant de remplacement (6) est disposé avec une plateforme de construction pouvant être déplacée en hauteur, sur laquelle le matériau de construction (3) pulvérulent prévu pour la solidification au moyen d'une énergie de rayonnement peut être appliqué,
**caractérisé par**
une puce mémoire (16) pouvant être retirée hors de la chambre de processus (5) du dispositif (1) avec le contenant interchangeable (6), pouvant être lue par l'intermédiaire d'un dispositif de lecture électronique (15), dans lequel le contenant interchangeable (6) est pourvu de la puce mémoire (16), sur laquelle sont sauvegardées des données pour commander au moins un moteur d'entraînement du contenant interchangeable (6) pour déplacer le contenant interchangeable (6).

2. Dispositif selon la revendication 1,
**caractérisé en ce que**
des moteurs de réglage pour le déplacement en hauteur de la plateforme de construction et/ou des éléments de chauffage et/ou des éléments de refroidissement et/ou des moteurs de ventilation et/ou des systèmes d'évacuation par aspiration sont intégrés dans le contenant interchangeable (6), et
sont commandés par l'intermédiaire de la puce mémoire (6).

3. Dispositif selon l'une quelconque des revendications précédentes,
**caractérisé en ce que**
la puce mémoire (16) est reliée à un panneau de construction (27) disposé sur la plateforme de construction ou est disposée dans celui-ci.

4. Dispositif selon l'une quelconque des revendications précédentes,
**caractérisé en ce que**
un dispositif de programmation (30, 31) pour la puce mémoire (16) est disposé dans la zone de la chambre de processus (5).

5. Dispositif selon l'une quelconque des revendications précédentes,
**caractérisé en ce que**
la puce mémoire (16) est intégrée dans le contenant interchangeable (6) ou est fixée sur celui-ci de manière amovible ou de manière inamovible, et/ou la puce mémoire (16) se situe à l'intérieur du contenant interchangeable (6) dans un matériau de construction non solidifié, et/ou est disposée dans une plateforme de construction.

6. Dispositif selon l'une quelconque des revendications précédentes,
**caractérisé en ce que**
des dispositifs de lecture électroniques (15) coopérant avec la puce mémoire (16) sont disposés
- dans le dispositif (1),
- dans d'autres postes de traitement (7) et/ou
- sur des tronçons des voies de transport (12) du contenant interchangeable (6) entre le dispositif (1) et les autres postes de traitement (7).

7. Dispositif selon l'une quelconque des revendications précédentes,
**caractérisé en ce que**
la puce mémoire (16) est reliée à au moins un processeur (40), qui coopère avec au moins un élément de capteur à l'intérieur du contenant interchangeable (6).

8. Dispositif selon l'une quelconque des revendications précédentes,
**caractérisé en ce que**
une multitude d'autres postes de traitement (7, 8, 9, 10) peuvent être approchés par le contenant interchangeable (6), dans lequel une multitude de dispositifs d'aiguillage pouvant être commandés de manière électronique par des informations de la puce mémoire (16) sont prévus le long de la voie de transport (12).

9. Dispositif selon l'une quelconque des revendications précédentes,
**caractérisé en ce que**
les cycles de traitement pouvant être sauvegardés sur la puce mémoire (16) concernent des étapes de traitement thermique, des étapes de traitement de surface mécanique, des étapes de mesure optique, des étapes d'exposition de surfaces à un rayonnement, des étapes d'inscription, des temps de refroidissement et des atmosphères de refroidissement.

10. Dispositif selon l'une quelconque des revendications précédentes,
**caractérisé en ce que**
les autres postes de traitement (7 - 10) sont respectivement au moins un poste d'exposition à un rayonnement thermique, un poste d'inscription, un poste de traitement de surfaces au laser, un poste de mesure, un poste de refroidissement et/ou un poste de prélèvement.

11. Dispositif selon l'une quelconque des revendications précédentes,
**caractérisé en ce que**
au moins un moteur de réglage du contenant interchangeable (6) peut être commandé par la puce mémoire (16), dans lequel le moteur de réglage commande le déplacement en hauteur de la plateforme de construction pouvant être déplacée en hauteur disposée dans le contenant interchangeable (6) suite à des informations enregistrées sur la puce mémoire (16).

12. Dispositif selon la revendication 1,
**caractérisé en ce que**
un dispositif de chauffage du contenant interchangeable (6) peut être commandé par des informations enregistrées sur la puce mémoire (16).

13. Dispositif selon l'une quelconque des revendications précédentes,
**caractérisé en ce que**
des données pour commander au moins un élément actif du contenant interchangeable (6) lui-même sont sauvegardées sur la puce mémoire (16), dans lequel la commande de l'élément actif du contenant interchangeable (6) peut être adaptée ou est adaptée au processus de construction.

14. Contenant interchangeable (6) destiné à être utilisé dans un dispositif selon l'une quelconque des revendications précédentes, dans lequel le contenant interchangeable (6) est pourvu d'une puce mémoire (16) pouvant être lue par l'intermédiaire d'un dispositif de lecture électronique (15) et d'au moins un moteur d'entraînement,
dans lequel des données pour commander l'au moins un moteur d'entraînement du contenant interchangeable (6) pour déplacer le contenant interchangeable (6) sont sauvegardées sur la puce mémoire (16).

15. Contenant interchangeable (7) selon la revendication 14, **caractérisé en ce que** le contenant interchangeable (6) comprend un moteur de réglage pour le déplacement en hauteur de la plateforme de construction, des éléments de chauffage, des éléments de refroidissement, des moteurs de ventilation et/ou des systèmes d'évacuation par aspiration, lesquels peuvent être commandés par l'intermédiaire de la puce mémoire (16).
